(19) Europäisches Patentamt
European Patent Office
Office européen des brevets

(11) **EP 4 607 996 A1**

(12) **EUROPEAN PATENT APPLICATION**

(43) Date of publication:
**27.08.2025 Bulletin 2025/35**

(21) Application number: **25159054.3**

(22) Date of filing: **20.02.2025**

(51) International Patent Classification (IPC):
*H04W 24/10* (2009.01)   *H04W 36/00* (2009.01)
*H04W 24/08* (2009.01)

(52) Cooperative Patent Classification (CPC):
**H04W 24/10; G06N 20/00; H04W 36/0058;**
H04W 24/08; H04W 36/085

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.02.2024 KR 20240026126
22.01.2025 KR 20250009518**

(71) Applicant: **KT Corporation
Seongnam-si, Gyeonggi-do 13606 (KR)**

(72) Inventor: **LEE, Eun Jong
Seongnam-si, Gyeonggi-do 13606 (KR)**

(74) Representative: **Brevalex
Tour Trinity
1 B Place de la Défense
92400 Courbevoie (FR)**

(54) **METHOD AND DEVICE FOR PROCESSING PREDICTED CELL MEASUREMENT RESULT BASED ON ARTIFICIAL INTELLIGENCE AND MACHINE LEARNING**

(57)   Provided are a method and device for processing a cell prediction result. The method may include receiving, from a base station, a configuration message including at least one of first event information on prediction time information and second event information on the cell prediction result, deriving an evaluation result for at least one of the first event information and the second event information using an artificial intelligence or machine learning model, and in an event that the derived evaluation result meets at least one of the first event information and the second event information, transmitting a report message including the cell prediction result to the base station.

*FIG.13*

## Description

### CROSS-REFERENCE TO RELATED APPLICATION

This application claims priority from Korean Patent Application No. 10-2024-0026126, filed on February 22, 2024, and 10-2025-0009518, filed on January 22, 2025, which are hereby incorporated by reference for all purposes as if fully set forth herein.

### BACKGROUND

#### Field

The disclosure relates to technology for processing predicted cell measurement results based on artificial intelligence and machine learning.

#### Description of Related Art

3GPP has been continuously performing measurements of surrounding cells as well as the serving cell to ensure the link connectivity of mobile UEs. However, as the network structure evolves, cells of various sizes are appearing, which is changing the environment into one where a large number of cells are deployed. This requires the UE to measure a larger number of cells, leading to significant overhead and increased complexity for the UE. Various technologies have been proposed to reduce the measurement burden in 5G, and measurement relaxation and mobility enhancement have been studied as major issues in 5G.

However, since the measurement relaxation of the typical art is performed based on the base station settings, there is a risk that handover (HO) may not be performed in a timely manner may occur, leading to HO delay and link disconnection problems. Further, conditional HO (CHO), which was introduced to enhance HO reliability, reduces HO failure of the UE but causes signaling overhead and resource waste between base stations, as HO request and admission control are preemptively performed for one or more cells.

Recently, with the development of artificial intelligence and machine learning technologies, research has been conducted to integrate the artificial intelligence and machine learning technologies into communication systems and apply them across various fields. In particular, considering the increased frequency of handover due to higher mobility and smaller cell sizes, there is a need to apply artificial intelligence and machine learning technologies to handover procedures.

### BRIEF SUMMARY

The disclosure discloses a technology for processing a predicted cell measurement result based on artificial intelligence and machine learning.

In an aspect, the present embodiments may provide a method for processing a cell prediction result by a UE. The method may include receiving, from a base station, a configuration message including at least one of first event information on prediction time information and second event information on the cell prediction result, deriving an evaluation result for at least one of the first event information and the second event information using an artificial intelligence or machine learning model, and in an event that the derived evaluation result meets at least one of the first event information and the second event information, transmitting a report message including the cell prediction result to the base station.

In another aspect, the present embodiments may provide a method for controlling processing of a cell prediction result of a UE by a base station. The method may include transmitting, to the UE, a configuration message including at least one of first event information on prediction time information and second event information on the cell prediction result, and when an evaluation result derived according to an artificial intelligence or machine learning model of the UE meets at least one of the first event information and the second event information, receiving, from the UE, a report message including the cell prediction result.

In another aspect, the present embodiments may include a UE processing a cell prediction result. The UE may include a receiver receiving, from a base station, a configuration message including at least one of first event information on prediction time information and second event information on the cell prediction result, a controller deriving an evaluation result for at least one of the first event information and the second event information using an artificial intelligence or machine learning model, and a transmitter, in an event that the derived evaluation result meets at least one of the first event information and the second event information, transmitting a report message including the cell prediction result to the base station.

In another aspect, the present embodiments may include a base station controlling processing of a cell prediction result of a UE. The base station may include a transmitter transmitting, to the UE, a configuration message including at least one of first event information on prediction time information and second event information on the cell prediction result, and a receiver, when an evaluation result derived according to an artificial intelligence or machine learning model of the UE meets at least one of the first event information and the second event information, receiving, from the UE, a report message including the cell prediction result.

According to the embodiments of the disclosure, a predicted cell measurement result may be processed based on artificial intelligence and machine learning. Further, a cell/beam level quality/intensity for neighboring cells may be predicted using artificial intelligence and machine learning technologies and utilized it for a handover process according to the embodiments of the disclosure.

## DESCRIPTION OF DRAWINGS

The above and other objects, features, and advantages of the disclosure will be more clearly understood from the following detailed description, taken in conjunction with the accompanying drawings, in which:

FIG. 1 is a diagram schematically illustrating a structure of an NR wireless communication system.

FIG. 2 is a diagram illustrating a frame structure in the NR system.

FIG. 3 is a diagram illustrating a resource grid supported by radio access technology.

FIG. 4 is a diagram illustrating a BWP supported by radio access technology.

FIG. 5 is a diagram illustrating an example of a synchronization signal block in radio access technology.

FIG. 6 is a diagram illustrating a random access procedure in radio access technology.

FIG. 7 is a diagram illustrating a CORESET.

FIG. 8 is a view illustrating a handover procedure between inter base stations.

FIG. 9 is a view illustrating an intra-AMF/UPF conditional handover procedure.

FIG. 10 is a view illustrating a UE operation according to an embodiment.

FIG. 11 is a view for describing operations of a base station according to an embodiment.

FIG. 12 is a view illustrating a prediction operation using AI/ML according to an embodiment.

FIG. 13 is a signal diagram illustrating a signal flow between a UE and a base station according to an embodiment.

FIG. 14 is a view illustrating a configuration of a UE according to an embodiment.

FIG. 15 is a view illustrating a configuration of a base station according to an embodiment.

## DETAILED DESCRIPTION

Hereinafter, embodiments of the disclosure will be described in detail with reference to the accompanying drawings. In designating elements of the drawings by reference numerals, the same elements will be designated by the same reference numerals even if they are shown in different drawings. Furthermore, in describing embodiments of the disclosure, a detailed description of related known configurations or functions may be omitted when doing so ensures that the main technical idea of the disclosure is not obscured. It will be understood that the terms "comprise", "include", "have", and any variations thereof used herein are intended to cover non-exclusive inclusions unless explicitly stated to the contrary. Descriptions of elements in the singular form used herein are intended to include descriptions of elements in the plural form, unless explicitly stated to the contrary.

Furthermore, terms, such as first, second, A, B, (a), or (b), may be used herein when describing elements of the disclosure. Each of these terms is not used to define the essence, order, sequence, or number of corresponding elements but is used merely to distinguish the corresponding elements from other elements.

In describing the positional relationship between elements, it will be understood that when two or more elements are referred to as being "connected", "coupled", or "joined" to each other, the elements may not only be "directly connected, coupled, or joined" to each other, but the elements may also be "indirectly connected, coupled, or joined" to each other via an "intervening" element. Here, the intervening element may be included in at least one of the two or more elements "connected", "coupled", or "joined" to each other.

In describing temporal flow relationships with respect to elements, methods of operation, or methods of production, for example, when a temporal antecedent or flow antecedent relationship, such as "after," "following," "next to," or "before," is described, non-continuous cases may also be included unless "immediately" or "directly" is used.

In addition, when numerical values for elements or corresponding information (e.g., level) are stated, the numerical values or information should be interpreted as including a tolerance or error range which may be caused by various factors (e.g., process factors, internal or external impacts, or noise) even if not explicitly stated otherwise.

The term "wireless communications system" used herein may refer to a system providing a range of communication services, including voice and packet data, using radio (or wireless) resources, and may include user equipment (UE), a base station, a core network, or the like.

Embodiments disclosed hereinafter may be used in wireless communications systems using a range of radio (or wireless) access technologies. For example, embodiments may be used in a range of radio access technologies, such as code division multiple access (CDMA), frequency division multiple access (FDMA), time division multiple access (TDMA), orthogonal frequency division multiple access (OFDMA), single carrier frequency division multiple access (SC-FDMA), or non-orthogonal multiple access (NOMA). Furthermore, radio access technologies may mean not only particular access technologies but also communications technologies according to the generation, established by a variety of communications consultative organizations, such as the 3rd generation partnership project (3GPP), the 3rd generation partnership project 2 (3GPP2), the Wi-Fi alliance, the Bluetooth, the institute of electrical and electronics engineers (IEEE), and the international telecommunication union (ITU). For example, CDMA may be realized by a wireless technology, such as universal terrestrial radio access (UTRA) or CDMA2000. TDMA may be realized by a wireless technology, such as the global system for mobile communications (GSM), general packet radio service (GPRS), or enhanced data rates for GSM evolution (EDGE). OFDMA may be realized by a wireless technology, such as IEEE 802.11 (Wi-Fi), IEEE 802.16 (WiMAX), IEEE 802-20, or evolved-UMTS terrestrial radio access (E-UTRA). IEEE 802.16m, evolved from IEEE 802.16e, provides backward compatibility with systems based on IEEE 802.16e. UTRA is a portion of universal mobile telecommunications system (UMTS). 3rd generation partnership project (3GPP) long term evolution (LTE) is a portion of evolved UMTS (E-UMTS) using E-UTRA, and uses OFDMA in downlinks and SC-FDMA in uplinks. In this manner, embodiments of the disclosure may be used in radio access technologies which are currently disclosed or commercially available, or may be used in any radio access technology which are currently being, or will be, developed.

In addition, the term "user equipment (UE)" used herein should be interpreted as being a comprehensive term referring to a wireless communications module which communicates with a base station in a wireless communications system, and should be interpreted as including not only user equipment in wideband code division multiple access (WCDMA), LTE, new radio access technology (NR), HSPA, international mobile telecommunications-2020 (IMT-2020; 5G or New Radio), and the like, but also all of a mobile station (MS), a user terminal (UT), a subscriber station (SS), a wireless device, and the like, used in GSM. The user equipment may refer to a mobile user device, such as a smartphone, depending on the type of use or may refer to a vehicle, a device including a wireless communications module in the vehicle, or similar devices within in the vehicle-to-everything (V2X) communications system. Furthermore, in the machine type communications (MTC) system, the user equipment may refer to MTC user equipment, machine-to-machine (M2M) user equipment, ultra-reliability and low latency communications (URLLC) user equipment, or similar equipment equipped with a communication module capable of supporting machine-type communications.

The term "base station" or "cell" used herein refers to an end in a network, communicating with the user equipment, and comprehensively refers to a variety of coverage areas, such as a node-B, an evolved node-B (eNB), a gNodeB (gNB), a low power node (LPN), a sector, a site, an antenna having a variety of shapes, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), and a small cell. The cell may also be understood as including a bandwidth part (BWP) in a frequency domain. For example, a serving cell may refer to an activation BWP of the user equipment.

Because at least one of the various cells is controlled by a dedicated base station, the base station may be interpreted in two senses. Each of the base stations may be i) a device which provides a megacell, a macrocell, a microcell, a picocell, a femtocell, or a small cell in relation to a wireless communication area, or2) the wireless communication area itself. In 1), the base station may be apparatuses providing wireless areas, which are controlled by the same entity or interact with one another to form a wireless area in a coordinated manner. According to the configuration of the wireless area, the point, the transmission/reception point, the transmission point, the reception point, and the like are examples of the base station. In 2), the base station may be the wireless area itself in which a signal is received from or transmitted to the perspective of a user or a neighboring base station.

In the disclosure, the term "cell" may refer to a coverage of a signal transmitted from the transmission point or the transmission/reception point, a component carrier having the coverage of the signal transmitted from the transmission point or the transmission/reception point, or the transmission point or the transmission/reception point itself.

The term "uplink (UL)" refers to a data transmission/reception scheme of transmitting/receiving data from the user equipment to the base station. The term "downlink (DL)" refers to a data transmission/reception scheme of transmitting/receiving data from the base station to the user equipment. The downlink may refer to communications or a communication path from a multiple transmission/reception point to the user equipment. The uplink may refer to communications or a communication path from the user equipment to the multiple transmission/reception point. In the downlink, a transmitter may be the multiple transmission/reception point, and a receiver may be the user equipment. Furthermore, in the uplink, the transmitter may be the user equipment, and the receiver may be the multiple transmission/reception point.

The uplink and the downlink transmit and receive control information via a control channel, such as a physical downlink control channel (PDCCH) or a physical uplink control channel (PUCCH), and the uplink and the downlink transmit and receive data via a data channel, such as a physical downlink shared channel (PDSCH) or a physical uplink shared channel (PUSCH). In the disclosure, "transmitting or receiving a signal via a channel, such as the PUCCH, the PUSCH, the PDCCH, or the PDSCH," may also be referred to as "transmitting or receiving the PUCCH, PUSCH, PDCCH, or PDSCH".

To clarify the description, the principle of the disclosure will be described with respect to a 3GPP LTE/LTE-A/NR (New RAT) communications system, but the technical features of the disclosure are not limited to the communications system.

In 3GPP, 5th generation (5G) communications technology is being developed to meet the next generation radio access technology requirements of the international telecommunication union radio-communication sector (ITU-R) after 4th generation (4G) communications technology. Specifically, in 3GPP, research on new NR communications technology distinct from LTE advanced Pro (LTE-A Pro) and 4G telecommunications technology evolved from LTE Advanced in accordance with the ITU-R requirements is being developed as 5G communications technology. Both LTE-A Pro and NR refer to 5G communications technology, and 5G communications technology will be described with respect to NR in the following, except where a particular communications technology is specified.

In NR, a variety of operation scenarios are defined by adding considerations about satellites, vehicles, new vertical services, and the like to typical 4G LTE scenarios. In terms of services, an enhanced mobile broadband (eMBB) scenario, a massive machine communication (MMTC) scenario having high user equipment density, deployed over a wide range, and requiring low data rates and asynchronous accesses, and an ultra-reliability and low latency communications (URLLC) scenario requiring high responsiveness and reliability and capable of supporting high-speed mobility are supported.

To meet the scenario described above, NR discloses a wireless communications system using technologies that provide a new waveform and frame structure, enable low latency, support ultrahigh frequency waves (mmWave), and ensure forward compatibility. In particular, the NR system presents various technical changes to enhance flexibility in order to provide forward compatibility. Major technical features of NR will be described below with reference to the accompanying drawings.

<General of NR System>

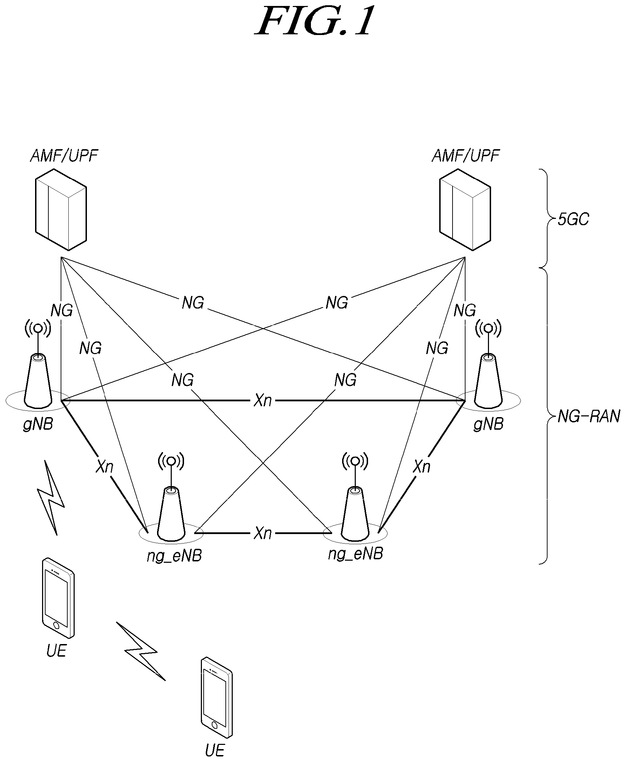

FIG. 1 is a diagram schematically illustrating a structure of an NR system.

Referring to FIG. 1, the NR system is divided into a 5G core network (5GC) part and an NR-RAN part. The NG-RAN includes gNBs and ng-eNBs, providing a control plane (or a radio resource control (RRC)) protocol endpoint of a user plane (SDAP/PDCP/RLC/MAC/PHY) and user equipment (UE). The gNBs are connected to each other, or the gNBs and the ng-eNBs are connected to each other via an Xn interface. The gNBs and the ng-eNBs are connected to each other to the 5GC via an NG interface. The 5GC may include i) an access and mobility management function (AMF) managing a control plane, such as terminal access and mobility control functions and ii) a user plane function (UPF) managing a control function over user data. The NR system includes support for both a frequency range of 6GHz or lower, for example, frequency range 1 (FR1), and a frequency range of 6GHz or higher, for example, frequency range 2 (FR2).

The gNBs refer to base stations that provide the NR user plane and control plane protocol endpoint to the user equipment. The ng-eNBs refer to base stations that provide E-UTRA user plane and control plane protocol endpoint to the user equipment. The term "base station" should be understood as comprehensively referring to the gNB and the ng-eNB, or the term "base station" may be used as distinctively referring to the gNB or the ng-eNB as desired.

<NR Waveform, Numerology, and Frame Structure>

NR uses cyclic prefix orthogonal frequency-division multiplexing (CP-OFDM) waveforms using the cyclic prefix (CP) for downlink transmissions and CP-OFDM or discrete Fourier transform spread (DFT-s)-OFDM for uplink transmissions. OFDM technology has the advantages of being able to easily combine with a multiple-input multiple-output (MIMO) method, achieve high frequency efficiency, and use a low-complexity receiver.

In addition, NR has different requirements for data rate, latency, coverage, and the like according to the three scenarios above-described. Thus, it is requested to efficiently meet the requirements according to the scenarios through frequency ranges of the NR system. In this regard, a technology for efficiently multiplexing a plurality of different numerology-based radio resources has been proposed.

Specifically, NR transmission numerology is determined based on the subcarrier spacing and the CP. $\mu$ values are used as exponential values of 2 based on 15 kHz and are exponentially changed, as illustrated in Table 1 below.

[Table 1]

| $\mu$ | Subcarrier Spacing | Cyclic prefix | Supported for data | Supported for synch |
|---|---|---|---|---|
| 0 | 15 | Normal | Yes | Yes |
| 1 | 30 | Normal | Yes | Yes |
| 2 | 60 | Normal, Extended | Yes | No |
| 3 | 120 | Normal | Yes | Yes |
| 4 | 240 | Normal | No | Yes |

As illustrated in Table 1 above, the numerology of NR may be divided into five types according to the subcarrier spacing. This differs from the subcarrier spacing of LTE, 4G communications technology, which is fixed to 15 kHz. Specifically, in NR, the subcarrier spacings used for data transmissions are 15, 30, 60, and 120 kHz, and the subcarrier spacings used for synchronous signal transmissions are 15, 30, 120, and 240 kHz. Furthermore, an extended CP is only applied to 60 kHz subcarrier spacing. In addition, the frame structure in NR is defined as a frame having a length of 10 ms, comprised of 10 subframes, each having the same lengths of 1 ms. A single frame may be divided into 5 ms half frames, each of which includes five subframes. In the case of 15 kHz subcarrier spacing, a single subframe includes a single slot, and each slot includes fourteen (14) OFDM symbols.

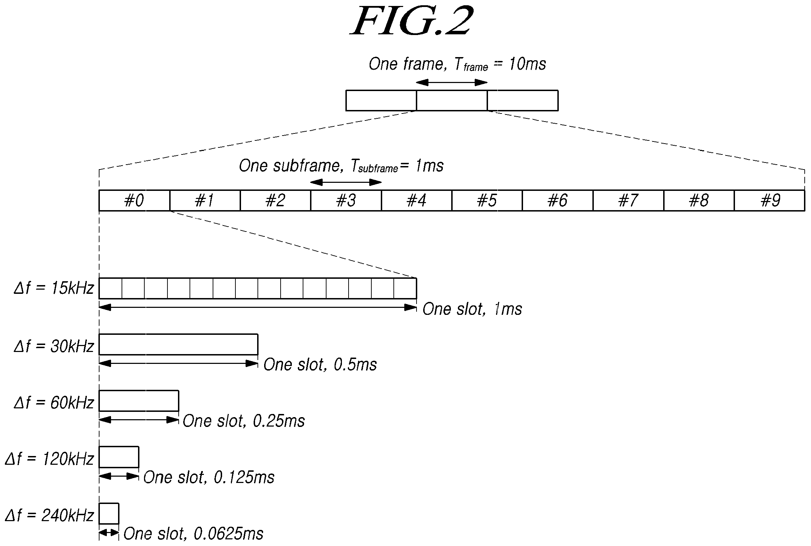

FIG. 2 is a diagram illustrating a frame structure in the NR system.

Referring to FIG. 2, the slot is constantly comprised of 14 OFDM symbols in the case of a normal CP, but the length of the slot in the time domain may vary depending on the subcarrier spacing. As an example, if the numerology has the 15 kHz subcarrier spacing, the length of the slot is 1 ms, equal to that of the subframe. As another example, if the numerology has the 30 kHz subcarrier spacing, the slot may be comprised of 14 OFDM symbols and have 0.5 ms length, such that two slots may be included in a single subframe. That is, each of the subframe and the frame is defined as having a fixed time length, and the slot may be defined by the number of symbols, such that the time length may vary depending on the subcarrier spacing.

In NR, the slot is defined as a basic unit of the scheduling, and a mini-slot (or a sub-slot or a non-slot based schedule) is also introduced to reduce a transmission delay in a wireless section. If a wide subcarrier spacing is used, the length of a single slot is shortened in inverse proportion thereto, and thus the transmission delay in the wireless section may be reduced. The mini-slot (or sub-slot) is devised to efficiently support URLLC scenarios and scheduling based on 2, 4, or 7 symbols may be possible.

Furthermore, unlike LTE, NR defines uplink and downlink resource allocations as symbol levels at a single slot. To reduce hybrid automatic repeat request (HARQ) latency, a slot structure able to directly transmit an HARQ acknowledgement/negative acknowledgement (ACK/NACK) in a transmission slot is defined. This slot structure will be named and described as a self-contained structure.

NR is designed to support a total of 256 slot formats, 62 of which are used in 3GPP Rel-15. In addition, various slot combinations support a common frame structure including an FDD or TDD frame. For example, NR supports a slot structure in which all symbols of the slot are configured as downlinks, a slot structure in which all symbols of the slot are configured as uplinks, and a slot structure in which downlink symbols and uplink symbols are combined. Furthermore, NR supports a form of scheduling in which data transmission is distributed across one or more slots. Accordingly, the base station may inform the user equipment of whether or not a corresponding slot is a downlink slot, an uplink slot, or a flexible slot using a slot format indicator (SFI). The base station may direct a slot format by directing an index of a table, configured by user equipment-specific RRC signaling using the SFI, dynamically using downlink control information (DCI) or statically or quasi-statically through the RRC.

<NR Physical Resource>

Regarding the physical resources in NR, antenna ports, resource grids, resource elements (RE), resource blocks, bandwidth parts (BWPs), and the like are considered.

The antenna port is defined to infer a channel carrying a symbol on an antenna port from a channel carrying another symbol on the same antenna port. If the large-scale property of a channel carrying the symbol on an antenna port is inferable from a channel carrying a symbol on another antenna port, the two antenna ports may be in a quasi co-located or quasi co-location (QC/QCL) relationship. Here, the large-scale property includes at least one of a delay spread, a Doppler spread, a frequency shift, average received power or received timing.

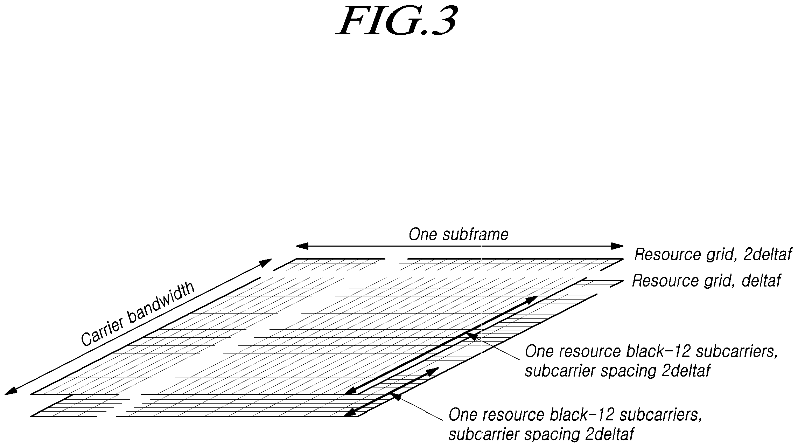

FIG. 3 is a diagram illustrating a resource grid supported by radio access technology.

Referring to FIG. 3, since NR supports a plurality of numerologies within the same carrier, the resource grid may be configured according to each numerology. Furthermore, the resource grid may be configured depending on the antenna port, the subcarrier spacing, and the transmission direction.

A resource block is comprised of 12 subcarriers and is only defined in a frequency domain. Furthermore, a resource element is comprised of a single OFDM symbol and a single subcarrier. Therefore, as shown in FIG. 3, the size of a single resource block may vary depending on the subcarrier spacing. Furthermore, NR defines "point A", a common resource block, a virtual resource block, and the like, where the "point A" serves as a common reference point for resource block grids.

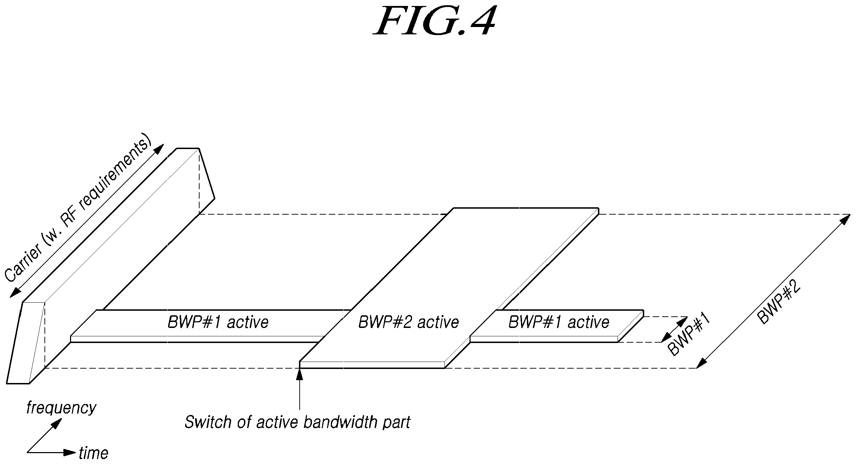

FIG. 4 is a diagram illustrating a BWP supported by radio access technology.

In NR, a maximum carrier bandwidth is established to be in the range from 50 MHz to 400 MHz depending on the subcarrier spacing, unlike in LTE where the carrier bandwidth thereof is fixed to 20 MHz. Therefore, it is not assumed that all user equipment uses all of these carrier bandwidths. Accordingly, as illustrated in FIG. 4, in NR, a bandwidth part (BWP) may be designated within a carrier bandwidth to be used by the user equipment. Furthermore, the BWP may be associated with a single numerology, be comprised of a contiguous subset of the common resource blocks and be dynamically activated over time. The user equipment is provided with up to four BWPs in each of an uplink and a downlink, and transmits and receives data using an activated BWP at a given time.

For a paired spectrum, uplink and downlink BWPs are configured independently. For an unpaired spectrum, an uplink BWP and a downlink BWP are configured in a pair, allowing the center frequency to be shared between them, thereby preventing unnecessary frequency re-tuning between downlink and uplink operations.

<Initial NR Access>

In NR, the user equipment performs cell search and random access procedures to access a base station and establish communications with the base station.

The cell search procedure involves synchronizing the user equipment with the cell of a corresponding base station via a synchronization signal block (SSB) transmitted from the base station, acquiring a physical layer cell identifier (ID), and retrieving system information.

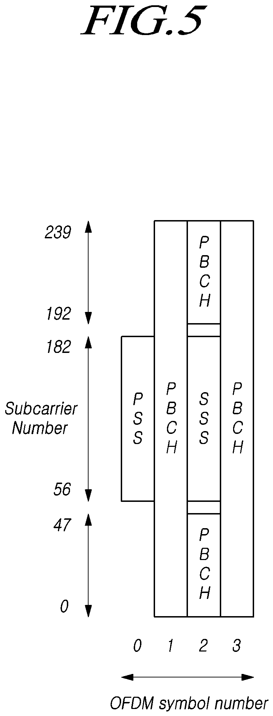

FIG. 5 is a diagram illustrating an example of a synchronization signal block in radio access technology.

Referring to FIG. 5, an SSB includes a primary synchronization signal (PSS) and a secondary synchronization signal (SSS), each of which occupies a single symbol and 127 subcarriers, as well as a physical broadcast channel (PBCH) that spans three OFDM symbols and 240 subcarriers.

The user equipment receives the SSB by monitoring the SSB in time and frequency domains.

The SSB may be transmitted up to 64 times within 5 ms. A plurality of SSBs are transmitted on different transmission beams within a period of 5 ms, and the user equipment performs detection under the assumption that an SSB is transmitted at every 20 ms, based on a single beam used for transmission. The number of beams which may be used for the SSB transmission within the 5 ms period may increase with increases in the frequency range. For example, up to four SSB beams may be transmitted in a frequency range of 3 GHz or lower. The SSB may be transmitted using up to eight beams in a frequency range of 3 to 6 GHz and up to 64 different beams in a frequency range of 6 GHz or higher.

Two SSBs are contained in a single slot, and the start symbol and the number of repetitions within the slot are determined based on the subcarrier spacing as will be described later.

In addition, unlike a synchronization signal (SS) of typical LTE, the synchronization signal block (SSB) is not transmitted on the center frequency of a carrier bandwidth. That is, the synchronization signal block (SSB) may be transmitted at a frequency offset from the center frequency of a system range, and multiple SSBs may be transmitted across a frequency domain if a wideband operation is supported. Therefore, the user equipment monitors the synchronization signal blocks (SSBs) using a synchronization raster which is a candidate frequency position for the monitoring of the SSBs. A carrier raster and a synchronous raster, which are center frequency position information of a channel for initial access, are newly defined in NR. The synchronous raster may be established to have a wider frequency interval than the carrier raster, and thus, may support the user equipment for fast SSB search.

The user equipment may acquire a master information block (MIB) through the PBCH of the SSB. The MIB includes minimum information required for the user equipment receives remaining minimum system information (RMSI) broadcast by the network. Furthermore, the PBCH may include information indicating the position of a first demodulation reference signal (DM-RS) symbol in the time domain, information enabling the user equipment to monitor system information block 1 (SIB1) (e.g., SIB1 numerology information, information about an SIB1 control resource set (CORESET), search space information, or PDCCH related parameter information), information about an offset between the common resource block and the SSB (in which the absolute position of the SSB in the carrier is transmitted via the SIB1), and the like. Here, the SIB1 numerology information is uniformly applied to some messages used in the random access procedure for accessing the base station after the user equipment completes the cell search procedure. Specifically, the SIB1 numerology information may be applied to at least one of messages 1 to 4 for the random access procedure.

The above-described RMSI may corresponds to system information block 1 (SIB1), which is broadcast periodically (e.g., at 160 ms) in the cell. SIB1 includes information necessary for the user equipment to perform an initial random access procedure and is periodically transmitted through the PDSCH. For the user equipment to receive SIB1, the user equipment is requested to receive i) numerology information used for SIB1 transmission and ii) control resource set (CORESET) information used for SIB1 scheduling, through the PBCH. The user equipment checks scheduling information about SIB1 using a system information radio network temporary identifier (SI-RNTI) in the CORESET and acquires SIB1 on the PDSCH according to the scheduling information. The remaining SIBs other than SIB1 may be transmitted periodically or at the request of the user equipment.

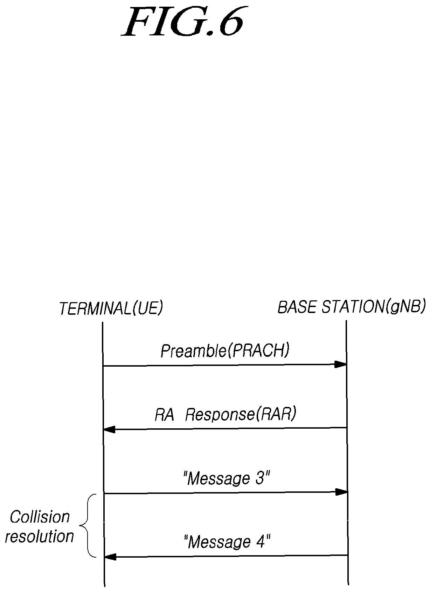

FIG. 6 is a diagram illustrating a random access procedure in radio access technology.

Referring to FIG. 6, when cell search is completed, the user equipment transmits a random access preamble for random access to the base station. The random access preamble is transmitted through a physical random access channel (PRACH). Specifically, the random access preamble is transmitted to the base station through the PRACH, comprised of consecutive radio resources in a selected slot periodically repeated. Typically, a contention-based random access procedure is performed when user equipment initially accesses a cell, whereas a non-contention based random access procedure is performed in when random access is performed for beam failure recovery (BFR).

The user equipment receives a random access response to the transmitted random access preamble. The random access response may include a random access preamble identifier (ID), an uplink (UL) radio resource grant, a temporary cell radio network temporary ID (temporary C-RNTI), and a time alignment command (TAC). Because a single random access response may include random access response information about at least one user equipment, the random access preamble ID may be included to illustrate for which user equipment the included UL grant, the temporary C-RNTI, and the TAC are valid. The random access preamble ID may be an ID of the random access preamble which the base station has received. The TAC may be included as information used by the user equipment to adjust uplink synchronization. The random access response may be identified by a random access ID on the PDCCH, specifically, a random access-radio network temporary ID (RA-RNTI).

Upon receiving the valid random access response, the user equipment processes information included in the random access response and performs a scheduled transmission to the base station. For example, the user equipment applies the TAC and stores the temporary C-RNTI. Additionally, data stored in a buffer of the user equipment or newly generated data is transmitted to the base station using the UL grant. In such cases, it is preferable to include information that may identify the user equipment.

Finally, the RA-RNTI receives a downlink message for contention resolution.

<NR CORESET>

In NR, a downlink control channel is transmitted on a control resource set (CORESET) having a length of between 1 to 3 symbols. Up/down scheduling information, slot format index (SFI) information, and transmit power control (TPC) information, among other details, are transmitted through the downlink control channel.

In NR, to secure the flexibility of the system as described above, the concept of CORESET is introduced. The CORESET refers to a time-frequency resource for a downlink control signal. The user equipment may decode a control channel candidate using one or more search spaces in a CORESET time-frequency resource. CORESET-specific quasi colocation (QCL) assumption is established. In addition to characteristics assumed by related-art QCL, such as delay spread, a Doppler spread, a Doppler shift, or an average delay, the QCL assumption is used to inform the characteristics of analogue beam directions.

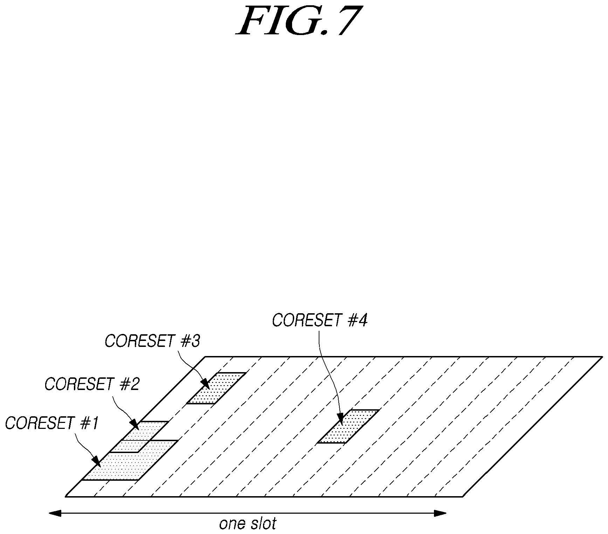

FIG. 7 is a diagram illustrating a CORESET.

Referring to FIG. 7, the CORESET may have a variety of forms within a carrier bandwidth in a single slot. The CORESET may be comprised of up to three OFDM symbols in the time domain. In addition, the CORESET is defined as a multiple of six resource blocks and extends up to the carrier bandwidth in the frequency domain.

The first CORESET is a portion of an initial BWP configuration and is indicated by the MIB to enable the UE to receive additional configuration information and system information from the network. After a connection to the base station is established, the user equipment may receive and configure one or more pieces of CORESET information by RRC signaling.

Herein, the frequency, the frame, the subframe, the resource, the resource block, the region, the band, the sub-band, the control channel, the data channel, the synchronization signal, various reference signals, various signals, or various messages, related to new radio (NR) access technology, may be interpreted as having a variety of meanings that reflect concepts used in the past, present, or future.

Mobile communication technology continuously performs measurements of surrounding cells as well as the serving cell to ensure the link connectivity of mobile UEs. However, as the network structure evolves, cells of various sizes have emerged, transforming the environment into one where a large number of cells are deployed. As a result, the UE should measure more cells, leading to significant overhead and increased complexity for the UE. Various technologies have been proposed to reduce the measurement burden in 5G, and measurement relaxation and mobility enhancement have been studied as major issues in 5G.

However, since the measurement relaxation of the typical technology is performed based on base station settings, there is a risk that handover (HO) may not be performed in a timely manner may occur, which results in HO delay and link disconnection problems. Furthermore, CHO, which was introduced to enhance HO reliability, reduces HO failure of the UE but causes signaling overhead and resource waste between base stations, as HO request and admission control are preemptively performed for one or more cells.

Recently, as AI/ML technologies have been applied to various communication fields, efforts have been made to address the high overhead and complexity issues in 5G. Accordingly, the use of AI/ML technologies in various fields is being considered.

In this context, the disclosure proposes a technology that enables a UE to efficiently report prediction results for a serving cell or neighboring cells to the base station, facilitating mobility management using AI/ML.

Specifically, when using a scheme to measure or predict the signal strength for beams belonging to neighboring cells based on AI/ML models, a new event needs to be defined to report predicted results, rather than measurement results, to the base station based on the predicted results. Further, the predicted cell or neighboring cell results may be used as assistance information for enhanced HO from the base station perspective. Therefore, it is necessary to define a method for reporting the output values of the AI/ML model to the base station.

First, the contents related to the handover and UE measurement of a connected UE are described below.

Mobility in RRC_CONNECTED

Network control mobility is applied to an RRC_CONNECTED UE and is classified into two types: cell level mobility and beam level mobility. The beam level mobility includes both intra-cell beam level mobility and inter-cell level mobility.

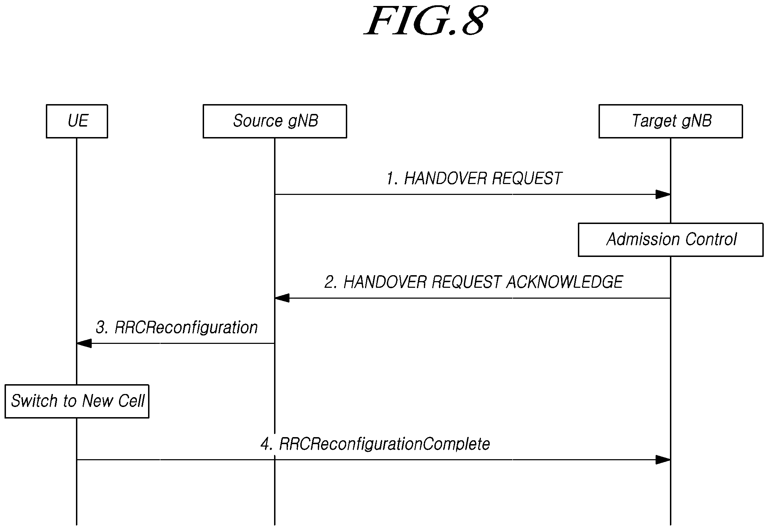

The cell level mobility requires an explicit RRC signal to be triggered, such as during handover. For inter-gNB handover, a signal procedure is performed based on a typical procedure as shown in FIG. 8.

FIG. 8 is a signal diagram illustrating a handover procedure between inter base stations.

Referring to FIG. 8, an inter-base station handover procedure will be briefly described.

1. The source gNB initiates handover and issues a HANDOVER REQUEST over the Xn interface.

2. The target gNB performs admission control and provides the new RRC configuration as part of the HANDOVER REQUEST ACKNOWLEDGE.

3. The source gNB provides the RRC configuration to the UE by forwarding the *RRCReconfiguration* message received in the HANDOVER REQUEST ACKNOWLEDGE. The *RRCReconfiguration* message includes at least cell ID and all information required to access the target cell so that the UE can access the target cell without reading system information. In some cases, the information required for contention-based and contention-free random access may be included in the *RRCReconfiguration* message. The access information to the target cell may include beam specific information, if any.

4. The UE transfers the RRC connection to the target gNB and responds with the *RRCReconfigurationComplete.*

In case of DAPS handover, the UE continues the downlink user data reception from the source gNB until the source cell is released and maintains the uplink user data transmission to the source gNB until successful random access procedure to the target gNB.

Only source and target PCell are used during DAPS handover. CA, DC, SUL, multi-TRP, EHC, CHO, UDC, NR sidelink configurations and V2X sidelink configurations are released by the source gNB before sending the handover command to the UE and are not configured by the target gNB until the DAPS handover is completed (i.e. at earliest in the same message that releases the source PCell).

The handover mechanism triggered by RRC requires the UE to at least reset the MAC entity and re-establish RLC, except in the case of DAPS handover, where upon reception of the handover command, the UE:

- Creates a MAC entity for target;
- Establishes the RLC entity and an associated DTCH logical channel for target for each DRB configured with DAPS;

- For each DRB configured with DAPS, reconfigures the PDCP entity with separate security and ROHC functions for source and target and associates them with the RLC entities configured by source and target respectively;
- Retains the rest of the source configurations until release of the source.

RRC managed handovers with and without PDCP entity re-establishment are both supported. For DRBs using RLC AM mode, PDCP can either be re-established together with a security key change or initiate a data recovery procedure without a key change. For DRBs using RLC UM mode, PDCP can either be re-established together with a security key change or remain unchanged without a key change. For SRBs, PDCP can either remain as it is, discard its stored PDCP PDUs/SDUs without a key change or be re-established together with a security key change.

Data forwarding, in-sequence delivery and duplication avoidance at handover can be guaranteed when the target gNB uses the same DRB configuration as the source gNB.

Timer based handover failure procedure is supported in NR. RRC connection re-establishment procedure is used for recovering from handover failure except in certain CHO or DAPS handover scenarios:

- When DAPS handover fails, the UE falls back to the source cell configuration, resumes the connection with the source cell, and reports DAPS handover failure via the source without triggering RRC connection re-establishment if the source link has not been released.
- When initial CHO execution attempt fails or HO fails, the UE performs cell selection, and if the selected cell is a CHO candidate and if network configured the UE to try CHO after handover/CHO failure, then the UE attempts CHO execution once, otherwise re-establishment is performed.

The handover of the IAB-MT in SA mode follows the same procedure as described for the UE. After the backhaul is established, the handover of the IAB-MT becomes part of the intra-CU topology adaptation procedure defined in TS 38.401. Modifications to the configuration of BAP sublayer and higher protocol layers above the BAP sublayer are described in TS 38.401.

**Beam Level Mobility** does not require explicit RRC signaling to be triggered. Beam level mobility can be within a cell, or between cells, the latter is referred to as inter-cell beam management (ICBM). For ICBM, a UE can receive or transmit UE dedicated channels/signals via a TRP associated with a PCI different from the PCI of a serving cell, while non-UE-dedicated channels/signals can only be received via a TRP associated with a PCI of the serving cell. The gNB provides the UE with measurement configuration via RRC signaling, which include SSB/CSI resource configurations, resource sets, report formats, and trigger states for initiating channel and interference measurements. In case of ICBM, a measurement configuration includes SSB resources associated with PCIs different from the PCI of the serving cell. Beam Level Mobility is then dealt with at lower layers through physical layer and MAC layer control signaling, with RRC not required to track which beam is being used at any given time.

SSB-based Beam Level Mobility is based on the SSB associated to the initial DL BWP and can only be configured for the initial DL BWPs and for DL BWPs that contains the SSB associated with the initial DL BWP. For other DL BWPs, Beam Level Mobility can only be performed based on CSI-RS.

Meanwhile, conditional handover (CHO), which executes handover under a specific condition, may also be used to reduce system overhead and support faster handover of the UE.

A Conditional Handover (CHO) is defined as a handover that is executed by the UE when one or more handover execution conditions are met. The UE starts evaluating the execution condition(s) upon receiving the CHO configuration and stops evaluating the execution condition(s) once a handover is executed.

The following principles apply to CHO:

- The CHO configuration contains the configuration of CHO candidate cell(s) generated by the candidate gNB(s) and execution condition(s) generated by the source gNB.
- An execution condition may consist of one or two trigger condition(s) (CHO events A3/A5, as defined in [12]). Only single RS type is supported and at most two different trigger quantities (e.g. RSRP and RSRQ, RSRP and SINR, etc.) can be configured simultaneously for the evaluation of CHO execution condition of a single candidate cell.
- Before any CHO execution condition is satisfied, upon reception of HO command (without CHO configuration), the UE executes the HO procedure as described in clause 9.2.3.2, regardless of any previously received CHO configuration.
- While executing CHO, i.e. from the time when the UE starts synchronization with target cell, UE does not monitor source cell.

CHO is also supported for the IAB-MT in context of intra- and inter-donor IAB-node migration and BH RLF recovery.

CHO is not supported for NG-C based handover in this release of the specification.

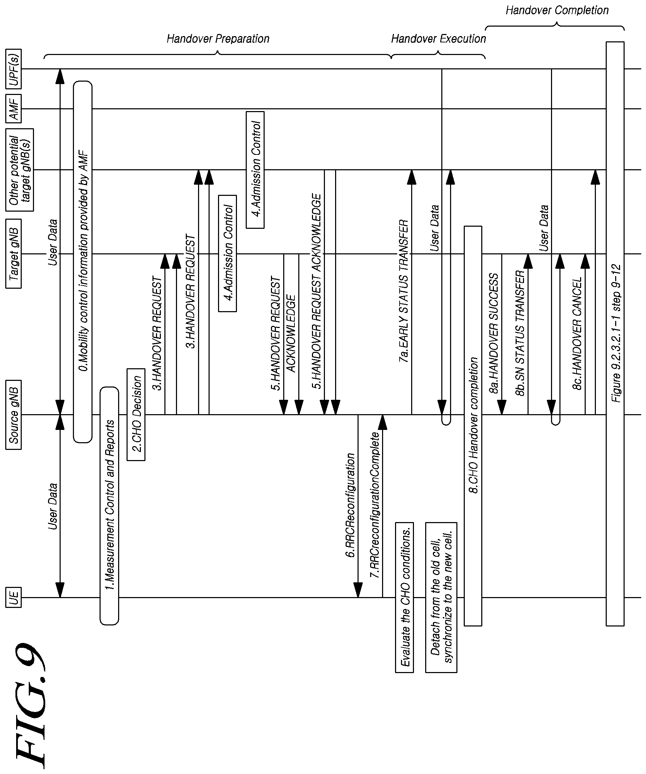

As in intra-NR RAN handover, in intra-NR RAN CHO, the preparation and execution phase of the conditional handover procedure is performed without involvement of the 5GC; i.e. preparation messages are directly exchanged between gNBs. The release of the resources at the source gNB during the conditional handover completion phase is triggered by the target gNB. FIG. 9 below depicts the basic conditional handover scenario where neither the AMF nor the UPF changes:

FIG. 9 is a view illustrating an intra-AMF/UPF conditional handover procedure.

The operation of each step will be briefly described with reference to FIG. 9.

0/1. Same as step 0, 1 in FIG. 8 of clause 9.2.3.2.1.

2. The source gNB decides to use CHO.

3. The source gNB requests CHO for one or more candidate cells belonging to one or more candidate gNBs. A CHO request message is sent for each candidate cell.

4. Same as step 4 in FIG. 8 of clause 9.2.3.2.1.

5. The candidate gNB(s) sends CHO response (HO REQUEST ACKNOWLEDGE) including configuration of CHO candidate cell(s) to the source gNB. The CHO response message is sent for each candidate cell.

6. The source gNB sends an *RRCReconfiguration* message to the UE, containing the configuration of CHO candidate cell(s) and CHO execution condition(s).

7. The UE sends an *RRCReconfigurationComplete* message to the source gNB.

7a If early data forwarding is applied, the source gNB sends the EARLY STATUS TRANSFER message.

8. The UE maintains connection with the source gNB after receiving CHO configuration and starts evaluating the CHO execution conditions for the candidate cell(s). If at least one CHO candidate cell satisfies the corresponding CHO execution condition, the UE detaches from the source gNB, applies the stored corresponding configuration for that selected candidate cell, synchronizes to that candidate cell and completes the RRC handover procedure by sending *RRCReconfigurationComplete* message to the target gNB. The UE releases stored CHO configurations after successful completion of RRC handover procedure.

8a/b. The target gNB sends the HANDOVER SUCCESS message to the source gNB to inform that the UE has successfully accessed the target cell. In return, the source gNB sends the SN STATUS TRANSFER message following the principles described in step 7 of Intra-AMF/UPF Handover in clause 9.2.3.2.1.

8c. The source gNB sends the HANDOVER CANCEL message toward the other signaling connections or other candidate target gNBs, if any, to cancel CHO for the UE.

3GPP has conducted research on technology to apply AI/ML models to beam management (BM), positioning, and CSI feedback use cases. As a result of the research, it was decided to proceed with AI/ML specification work to enhance beam management and positioning accuracy in Rel-19. Based on these research results, efforts to apply AI/ML to communication technology are being made across various fields. In particular, Rel-19 is expected to start a new study on the topic of AI/ML based mobility.

Research on BM, which has been discussed previously, was conducted to reduce the burden/delay of beam measurement for mobility within a cell and to minimize the overhead associated with reference signal resources allocated for beam measurement. NR experiences frequent link failures due to beamforming technology in high frequency bands. This also impacts the determination of inter-cell HO. Beam link failure may read to frequent HO or HO failure. Therefore, NR mobility enhancement has been continuously discussed to address these challenges, and the following new features have been defined.

- CHO (Conditional HO) in Rel-16;
- ICBM (Inter-Cell Beam Management) in Rel-17;
- LTM (Lower-layer Triggered Mobility) in Rel-18.

As described above, 3GPP has continuously performed measurements of surrounding cells as well as the serving cell to ensure the link connectivity of mobile UEs. However, to mitigate high overhead and increased complexity, measurement relaxation and mobility enhancement have been additionally studied.

Nevertheless, these technologies also faced challenges, including link loss, delay issues, signaling overhead, and resource waste. Recently, with the application of AI/ML technologies in various communication fields, efforts have been made to address the high overhead and complexity issues in 5G.

When using an AI/ML model to predict signal strength, quality, or movement timing for neighboring cells, as described in this disclosure, it is expected to reduce the UE's cell measurement burden and enable inter-cell movement at the most optimal timing, thereby enhancing HO efficiency.

Therefore, when using a scheme to measure or predict the signal strength for beams belonging to neighboring cells based on AI/ML models, a new event needs to be defined to report predicted results, rather than measurement results, to the base station based on the predicted results. The predicted neighboring cell results may be used as assistance information to enhance HO from the base station perspective. Accordingly, it is necessary to define a method for reporting the output values of the AI/ML model to the base station.

According to the embodiments, a new reporting event may be defined for reporting predicted neighboring cell information when a UE uses an AI/ML model to predict the cell/beam level quality/strength of neighboring cells. Additionally, a measurement configuration and reporting scheme may be established based on the defined event.

In this disclosure, "cell" refers to a serving cell or a neighboring cell predicted by the UE. However, for clarity and ease of understanding, the term "cell" is used throughout the description to refer to both a serving cell or a neighboring cell. Further, in some parts of the description, neighboring cells may be explicitly mentioned for clarity, but this does not exclude the serving cell.

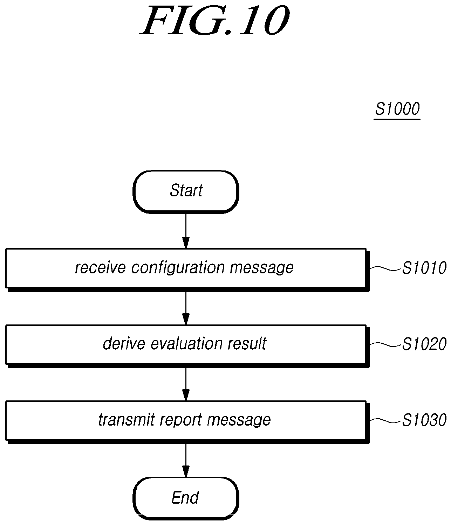

FIG. 10 is a flowchart illustrating a UE operation according to an embodiment.

Referring to FIG. 10, the method S1000 of processing a cell prediction result by the UE may include receiving a configuration message including at least one of first event information based on prediction time information and second event information based on the cell prediction result from the base station (S1010).

According to an embodiment, the UE may receive event information from the base station through an RRC message, which is configured for the UE to evaluate a cell prediction result and report it accordingly.

According to an embodiment, the first event information may include information what future time of prediction information the UE is to perform reporting based on. The first event information may include information on a time interval as the prediction time information or information on one or more specific time instances as the prediction time information. Here, the prediction time information may refer to a future time when the UE makes a prediction.

According to an embodiment, the first event information may be configured to report the prediction result at a corresponding future time (prediction time) within a preset time duration. For example, the prediction time may be set within a time window of T1+duration from T1 after a reference time (absolute time or reference (e.g., SFN/slot based) time), the time when an event is set, or the time when prediction is performed. T1 may have a value larger than or equal to 0. Alternatively, T1 may be set by a timer, and the start point may be set based on SFN/slot, etc.

According to another embodiment, the first event information may be configured to report the prediction result at times corresponding to N predefined time instances. For example, the prediction time refers to reporting based on N time instances starting from T1 after a reference time (absolute time or reference (e.g., SFN/slot based) time), the time when an event is set, or the time when prediction is performed. The reporting times may be set as T1+a, T1+2a, or T1+N*a, where, N is an integer value larger than or equal to 1. T1 may have a value greater than or equal to 0. T1 may be set by a timer or as a specific time value. The start point may be determined based on SFN/slot, etc.

The second event information may include details (e.g., information) regarding the time for reporting a report message based on the cell prediction result.

According to an embodiment, the second event information may include event information (e.g., details) that determines a reporting trigger of a report message based on a comparison result between a threshold and the cell prediction result. Alternatively, it may include event information on whether to trigger a report message by comparing the cell prediction results of the serving cell and the neighboring cell. Alternatively, both the event information described above may be included.

Accordingly, the UE receives a higher layer message including at least one of the following: i) event information (first event information) for setting a time for cell prediction and ii) event information (second event information) for determining a reporting trigger based on the cell prediction result. The UE may configure the received event information accordingly. The event information may be received through various messages, such as a higher layer message or system information or a lower layer message. Alternatively, it may be previously configured to the UE.

The method S1000 of processing the cell prediction result by the UE may include deriving an evaluation result for at least one of the first event information and the second event information using the artificial intelligence or machine learning model (S1020).

According to an embodiment, the UE may derive the cell prediction result for the serving cell or the neighboring cell using the artificial intelligence or machine learning model configured in the UE. The artificial intelligence or machine learning model may receive at least one of the following as input: a cell quality measurement result and a beam quality measurement result. It then outputs the cell prediction result, which includes at least one of the following: a cell quality prediction result and a cell strength prediction result at the prediction time.

According to an embodiment, the UE may provide the cell quality measurement results, which measured the quality of the cell at a past time, as input values to the artificial intelligence model or machine learning model. The artificial intelligence model or machine learning model may output the cell prediction results at the prediction time based on these input values. In other words, the cell prediction result may be derived using the cell level measurement result as the input value.

According to another embodiment, the UE may provide the cell quality measurement result of the cell at a past time as an input to the artificial intelligence model or machine learning model. The artificial intelligence model or machine learning model may output (e.g., generate) the cell prediction results at the prediction time based on the input values. In other words, the cell prediction result may be derived using the beam level measurement result as the input value.

According to another embodiment, the UE may provide the predicted beam prediction results as input values to the artificial intelligence model or machine learning model. The artificial intelligence model or machine learning model may generate (e.g., output) the cell prediction results at the prediction time based on the input values. In other words, the cell prediction result may be derived using the beam level prediction result as input. Here, the beam level prediction result may be generated by the artificial intelligence model or the machine learning model using the past beam measurement result.

Meanwhile, the cell prediction result may include a cell quality prediction result or a cell strength prediction result for the serving cell. For example, the cell prediction result may include result information, such as RSRP, RSRQ, SINR, etc. for the serving cell or neighboring cell.

The UE may determine whether the cell prediction result satisfies at least one condition defined in the first event information or second event information.

The method S1000 of processing the cell prediction result by the UE may include transmitting, to the base station, a report message including the cell prediction result when the derived evaluation result satisfies at least one condition defined in the first event information or the second event information (S1030).

According to an embodiment, if the derived evaluation result is determined to satisfy the first event information, the UE may transmit a report message to the base station.

According to another embodiment, the UE may transmit a report message to the base station if the derived evaluation result satisfies both the first event information and the second event information. In other words, the report message may be transmitted only when the evaluation result meets both the first event information and the second event information.

According to another embodiment, if the derived evaluation result is determined to meet the second event information, the UE may transmit a report message to the base station. In this case, the evaluation result may be reported if the second event, which serves as the trigger event for the report message, is met, regardless of whether the first event information is satisfied.

Here, the cell prediction result may include at least one of the following: a cell quality prediction result and a cell strength prediction result for the neighboring cell and/or the serving cell.

Further, the report message may include indication information (indicator) to indicate (e.g., specify) that the cell prediction result is included in the report message. Alternatively, the report message may include at least one of the following: the time information related to the prediction time, information about the predicted target cell, cell prediction result information about the target, and indication information.

The base station may use the received report message to perform the mobility control operation based on the UE's movement, as described above. Furthermore, system overhead can be reduced by predicting the cell result at the prediction time using an artificial intelligence or machine learning model and transmitting it to the base station, only when useful information is available.

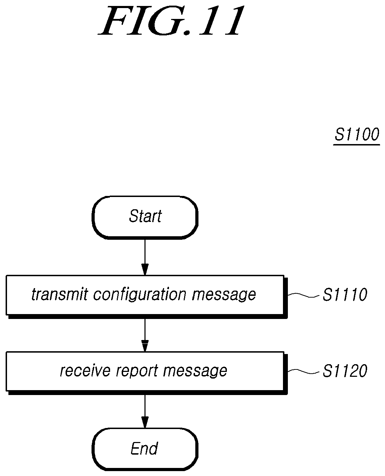

FIG. 11 is a flowchart for describing operations of a base station according to an embodiment.

Referring to FIG. 11, the method S1100 for controlling processing of a cell prediction result by the base station may include transmitting a configuration message to the UE (S1110). The configuration message may include at least one of the following: first event information on prediction time information and second event information on the cell prediction result to the UE (S1110).

According to an embodiment, the base station may transmit event information to the UE through an RRC message, serving as a reference for configuring the UE to evaluate a cell prediction result and report it.

According to an embodiment, the first event information may include information what future time of prediction information the UE is to perform reporting based on (e.g., specify the future time at which the UE should perform reporting based on prediction information). The first event information may include the prediction time information defined as either a time interval or one or more specific time instances. Here, the prediction time information may refer to a future time when the UE makes a prediction.

According to an embodiment, the first event information may be configured to report the prediction result at a corresponding future time (prediction time) within preset time duration. For example, the prediction time may be set within a time window of T1+duration from T1, following a reference time (absolute time or reference (e.g., SFN/slot based) time), the time when an event is set, or the time when prediction is performed. T1 may have a value larger than or equal to 0. Alternatively, T1 may be set by a timer, and the start point may be set based on SFN/slot, etc.

According to another embodiment, the first event information may be configured to report the prediction result at times corresponding to N predefined time instances. For example, the prediction time refers to determining reporting based on N time instances starting from T1 after a reference time (absolute time or reference (e.g., SFN/slot based) time), the time when an event is set, or the time when prediction is performed. The reporting times may be set as T1+a, T1+2a, or T1+N*a, where, N is an integer value larger than or equal to 1. T1 may have a value greater than or equal to 0. T1 may be set by a timer or as a specific time value. The start point may be set based on SFN/slot, etc.

The second event information may include event information (e.g., details) related to the time (triggering condition) for reporting a report message based on the cell prediction result.

For example, the second event information may include event information that determines a reporting trigger for a report message based on a comparison result between a threshold and the cell prediction result. Alternatively, it may include event information for determining whether to trigger a report message by comparing the cell prediction results of the serving cell and the neighboring cell. Alternatively, both event information described above may be included.

Accordingly, the base station transmits a higher layer message that includes at least one of the following: i) event information (first event information) for setting a time for cell prediction and ii) event information (second event information) for determining a reporting trigger based on the cell prediction result. The UE may configure the received event information accordingly. The event information may be transmitted through various messages, such as a higher layer message, system information, or a lower layer message. Alternatively, it may be previously configured in the UE.

The method S1100 of controlling the processing of the cell prediction result of the UE may include receiving a report message from the UE, which includes the cell prediction result when the evaluation result derived according to the artificial intelligence or machine learning model of the UE satisfies at least one condition defined in the first event information and the second event information (S1120).

According to an embodiment, the UE may derive the cell prediction result for the serving cell or the neighboring cell using the artificial intelligence or machine learning model configured in the UE. The artificial intelligence or machine learning model may receive at least one of the following as input: a cell quality measurement result and a beam quality measurement result. It outputs the cell prediction result including at least one of a cell quality prediction result and a cell strength prediction result at the prediction time.

According to an embodiment, the UE may provide (e.g., input) the cell quality measurement results, which measured (e.g., represent) the quality of the cell at a past time, as input values to the artificial intelligence model or machine learning model. The artificial intelligence model or machine learning model may output (e.g., generate) the cell prediction results at the prediction time based on the input values. In other words, the cell prediction result may be output (e.g., derived) using the cell level measurement result as input.

According to another embodiment, the UE may provide the cell quality measurement result in the cell at a past time, as an input to the artificial intelligence model or machine learning model. The artificial intelligence model or machine learning model may output (e.g., generate) the cell prediction results at the prediction time based on the input values. In other words, the cell prediction result may be output (e.g., derived) using the beam level measurement result as input.

According to another embodiment, the UE may input (e.g., provide) the predicted beam prediction results, as an input to the artificial intelligence model or machine learning model. The artificial intelligence model or machine learning model may output (e.g., generate) the cell prediction results at the prediction time based on the input. In other words, the cell prediction result may be output (e.g., derived) using the beam level prediction result as input. Here, the beam level prediction result may be derived using the past beam measurement result through the artificial intelligence model or the machine learning model.

Meanwhile, the cell prediction result may include a cell quality prediction result or a cell strength prediction result for the serving cell. For example, the cell prediction result may include result information, such as RSRP, RSRQ, SINR, etc. for the serving cell or neighboring cell.

The UE may determine whether the cell prediction result satisfy at least one of the first event information and second event information.

Meanwhile, if the derived evaluation result is determined to satisfy the first event information, the UE may transmit a report message to the base station, and the base station may receive the same.

Alternatively, the UE may transmit a report message to the base station if it is determined that the derived evaluation result meets both the first event information and the second event information, and the base station may receive the same. In other words, the report message may be received only when the evaluation result meets both the first event information and the second event information.

Alternatively, if the derived evaluation result is determined to meet the second event information, the UE may transmit a report message to the base station, and the base station may receive the same. In this case, the evaluation result may be reported if the second event, which is the trigger event of the report message, is satisfied, regardless of whether the first event information is satisfied.

Here, the cell prediction result may include at least one of a cell quality prediction result and a cell strength prediction result for the neighboring cell and/or the serving cell.

Further, the report message may include indication information (indicator) to indicate that the cell prediction result is included in the report message. Alternatively, the report message may include at least one of i) the time information on the prediction time, ii) information on the predicted target cell, iii) cell prediction result information about the target, and iv) indication information.

The base station may use the received report message to perform the mobility control operations according to the movement of the UE, as described above. Furthermore, system overhead can be reduced by predicting the cell result at the prediction time using an artificial intelligence or machine learning model and allowing the base station to receive it only when useful information is available.

The operations have been described above from a perspective of each of the UE and the base station. More detailed embodiments of each step, as well as the operations that may be performed by the UE and base station, will be described hereinafter. The following embodiments may be executed in any combination within the previously described steps. Alternatively, the embodiments described below may be added as separate steps and performed by the UE and the base station.

In the following description, the above-described prediction time refers to a future time distinct from the present. Additionally, while the focus is primarily on neighboring cellsneighboring cell, as described above, predictions for the serving cell are also included.

The AI/ML model of the UE may predict the quality/strength of the cell/beam not measured through some cell/beam measurements. Alternatively, the AI/ML model of the UE may also predict the quality/strength results of the neighboring cell at the future time (prediction time) based on history information about past measurements. The disclosure defines a new event applicable to such two use cases and proposes a procedure.

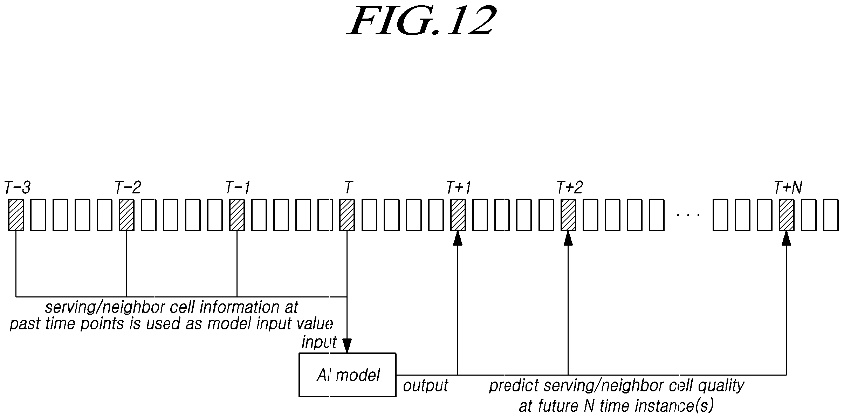

FIG. 12 is a view illustrating a prediction operation using AI/ML according to an embodiment.

Referring to FIG. 12, when predicting a neighboring cell result at a future time, the UE may measure the cell/beam level quality/strength for the neighboring cell and the serving cell and use these measurements as input values to predict the cell/beam level quality/strength for the neighboring/serving cell for the future N time instance(s).

Specifically, when the AI/ML model is located in the UE, and the UE uses the same to predict the quality/strength for the neighboring/serving cell at N time instance(s) of the neighbor/serving cell, it is required to determine which future time (e.g., T+1, T+2,..., T+N) the reporting should be based on. The base station may configure an event (first event) that allows reporting for a specific time/time interval to be performed by the UE. The following is an example of the proposed event, and one or more of the following may be included in the first event.

**Event P_T1 (Time predicted at UE is within a duration from threshold); or**

- Reports the prediction result at a future time (prediction time) within a set time duration.
- This may refer to a time window within T1+duration from T1 after a reference time (absolute time or reference (e.g., SFN/slot based) time), a time when an event is set, or a time when prediction is performed.
- T1 may have a value greater than or equal to 0.
- T1 may be set by a timer, and the start point may be set based on SFN/slot, etc.

**Event P_T1 (Time predicted at UE is to N time instance(s) from threshold)**

- Reports the prediction result at a time corresponding to set N time instances

This means determining reporting based on N time instances from T1 after a reference time (absolute time or reference (e.g., SFN/slot based) time), a time when an event is set, or a time when prediction is performed, to T1+a, T1+2a, or T1+N*a. (where, N is an integer value larger than or equal to 1)

- T1 may have a value larger than or equal to 0.
- T1 may be set by a timer or as a specific time value, and the start point may be set based on SFN/slot, etc.

Further, when the quality/strength of an unmeasured surrounding cell/beam level is predicted based on certain cell/beam measurements, the UE needs to configure a new event (second event) for reporting such prediction result. This event may be jointly configured based on the prediction result at each time, along with the event for a defined future time (prediction time). The new event (second event), based on the cell prediction result proposed in the present embodiment, may be defined as follows. At least one of the following events may be included in the second event.

**Event P_A1 (*Predicted* serving becomes better than absolute threshold)**
**Event P_A2 (*Predicted* serving becomes worse than absolute threshold)**
**Event P_A3 (*Predicted* neighbour becomes amount of offset better than *predicted* PCell/PSCell)**
**Event P_A4 (*Predicted* neighbour becomes better than absolute threshold)**
**Event P_A5 (*Predicted* PCell/PSCell becomes worse than absolute threshold1 AND *predicted* neighbour/SCell becomes better than another absolute threshold2)**
**Event P_A6 (*Predicted* neighbour becomes amount of offset better than *predicted* SCell)**

More specifically, for the event in which the UE reports cell information at the predicted future time, it is preferable to configure Event P_A3 or P_A5 together with Event P_T1, as proposed above.

The base station allows the prediction result to be reported when the UE satisfies two or more set conditions. In other words, if the event time within the set time interval of Event P_T1 corresponds to T+1 or T+2, the UE additionally evaluates Event P_A3 or Event P_A5 based on the predicted results of serving/neighboring cell at the T+1 and T+2 relative to the current time T when the AI/ML model performs prediction. If the predicted result of the serving/neighboring cell predicted at the T+1 and T+2 meets Event P_A3 or Event P_A5, the UE transmits a prediction/measurement report message to the base station. This message includes at least one of the following: i) time information about the satisfying time, ii) cell ID corresponding thereto, and iii) the prediction result value for the corresponding cell. In this case, the UE may include an indicator indicating that the corresponding report is to report the prediction result or to indicate reporting the predicted result at the future time implicitly through the time information.

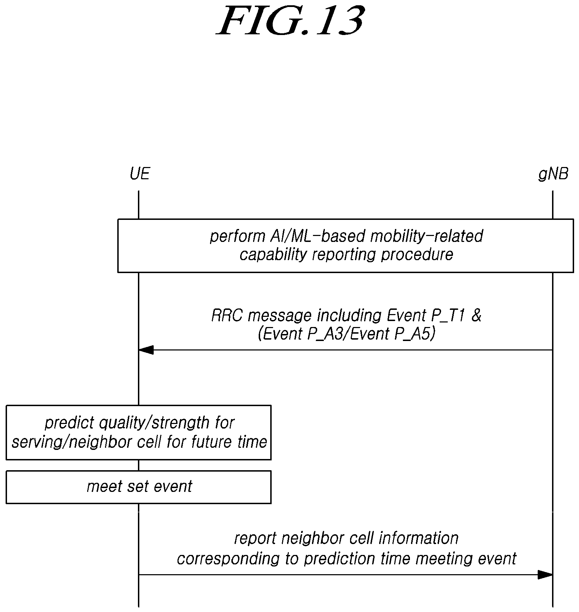

FIG. 13 is a signal diagram illustrating a signal flow between a UE and a base station according to an embodiment.

Referring to FIG. 13, the operations of the UE and the base station are described based on an exemplary event among the above-described events.

[UE operations]

- The UE reports AI/ML model-related information to the base station.
- The UE receives an RRC message including a measurement configuration from the base station. The message includes at least one of the following pieces of information:.

  o Event P_T1;
  o Event P_A3 or Event P_A5;

- The UE performs an evaluation of whether the predicted result at a future time set by event P_T1 meets P_A3 or P_A5.
- If there is a meeting event, a measurement report message including cell information set by the base station is transmitted to the base station. The message includes at least one of the following pieces of information:

  o Time information about a future time;
  o Predicted target cell information;
  o Prediction result information for the target cell.

[Base station operations]

- The base station receives AI/ML model-related information from the UE.
- The base station configures an RRC message including a measurement configuration for the UE. The message includes at least one of the following pieces of information.

  o Event P_T1;
  o Event P_A3 or Event P_A5;

- The base station receives a measurement report message including at least the following information from the UE.

  o Time information about a future time;
  o Predicted target cell information;
  o Prediction result information for the target cell.

The detailed conditions of each event are described in greater detail. The event names below are exemplary, and may be changed.

**Event P_T1 (Time predicted at UE is within a duration from threshold)**

- The UE shall:

1> consider the entering condition for this event to be satisfied when condition T1-1, as specified below, is fulfilled;
1> consider the leaving condition for this event to be satisfied when condition T1-2, as specified below, is fulfilled;

- Inequality T1-1 (Entering condition)

$$Pt > Thresh1$$

- Inequality T1-2 (Leaving condition)

$$Pt > Thresh1 + Duration$$

- The variables in the formula are defined as follows:
  Pt is the time predicted at UE.
- Thresh1 is the threshold parameter for this event (i.e. t1-Threshold as defined within reportConfigNR for this event).
- Duration is the duration parameter for this event (i.e. duration as defined within reportConfigNR for this event).
  Pt is expressed in ms.
- Thresh1 is expressed in the same unit as Pt.
- Duration is expressed in the same unit as Pt.

**Event P_A3 (Predicted Neighbour becomes offset better than predicted SpCell)**

1> The UE shall:
1> consider the entering condition for this event to be satisfied when condition A3-1, as specified below, is fulfilled;
1> consider the leaving condition for this event to be satisfied when condition A3-2, as specified below, is fulfilled;
use the SpCell for Pp, Ofp and Ocp.
Inequality A3-1 (Entering condition)
-

$$Pn + Ofn + Ocn - Hys > Pp + Ofp + Ocp + Off$$

Inequality A3-2 (Leaving condition)
-

$$Pn + Ofn + Ocn + Hys < Pp + Ofp + Ocp + Off$$

The variables in the formula are defined as follows:

- Pn is the prediction result of the neighbouring cell, not taking into account any offsets.
- Ofn is the measurement object specific offset of the reference signal of the neighbour cell (i.e. offsetMO as defined within measObjectNR corresponding to the neighbour cell).
- Ocn is the cell specific offset of the neighbour cell (i.e. cellIndividualOffset as defined within measObjectNR corresponding to the frequency of the neighbour cell), and set to zero if not configured for the neighbour cell.
- Pp is the prediction result of the SpCell, not taking into account any offsets.
- Ofp is the measurement object specific offset of the SpCell (i.e. offsetMO as defined within measObjectNR corresponding to the SpCell).
- Ocp is the cell specific offset of the SpCell (i.e. cellIndividualOffset as defined within measObjectNR corresponding to the SpCell), and is set to zero if not configured for the SpCell.
- Hys is the hysteresis parameter for this event (i.e. hysteresis as defined within reportConfigNR for this event).
- Off is the offset parameter for this event (i.e. a3-Offset as defined within reportConfigNR for this event).
- Pn, Pp are expressed in dBm in case of RSRP, or in dB in case of RSRQ and RS-SINR.
- Ofn, Ocn, Ofp, Ocp, Hys, Off are expressed in dB.

Event P_A5 (Predicted SpCell becomes worse than threshold1 and predicted neighbour becomes better than threshold2)

- The UE shall:

1> consider the entering condition for this event to be satisfied when both condition A5-1 and condition A5-2, as specified below, are fulfilled;
1> consider the leaving condition for this event to be satisfied when condition A5-3 or condition A5-4, i.e. at least one of the two, as specified below, is fulfilled;
1> use the SpCell for Pp.

- Inequality A5-1 (Entering condition 1)

$$Pp + Hys < Thresh1$$

- Inequality A5-2 (Entering condition 2)

$$Pn + Ofn + Ocn - Hys > Thresh2$$

- Inequality A5-3 (Leaving condition 1)

$$Pp - Hys > Thresh1$$

- Inequality A5-4 (Leaving condition 2)

$$Pn + Ofn + Ocn + Hys < Thresh2$$

- The variables in the formula are defined as follows:

Pp is the prediction result of the NR SpCell, not taking into account any offsets.

Pn is the prediction result of the neighbouring cell, not taking into account any offsets.

Ofn is the measurement object specific offset of the neighbour cell (i.e. offsetMO as defined within measObjectNR corresponding to the neighbour cell).

Ocn is the cell specific offset of the neighbour cell (i.e. cellIndividualOffset as defined within measObjectNR corresponding to the neighbour cell), and set to zero if not configured for the neighbour cell.

Hys is the hysteresis parameter for this event (i.e. hysteresis as defined within reportConfigNR for this event).

Thresh1 is the threshold parameter for this event (i.e. a5-Threshold1 as defined within reportConfigNR for this event).

Thresh2 is the threshold parameter for this event (i.e. a5-Threshold2 as defined within reportConfigNR for this event).

Pn, Pp are expressed in dBm in case of RSRP, or in dB in case of RSRQ and RS-SINR.

Ofn, Ocn, Hys are expressed in dB.

Thresh1is expressed in the same unit as Pp.

Thresh2 is expressed in the same unit as Pn.

According to the embodiments described above, when the UE predicts a serving cell or neighboring cell result at a future time using AI/ML, only valid information from the predicted results may be reported to the base station at an appropriate time. This minimizes the reporting burden on the UE and helps the base station determine HO to the predicted cell by receiving relevant information in a timely manner.

Hereinafter, configurations of a base station and a UE capable of performing the above-described operations will be described with reference to the accompanying drawings.

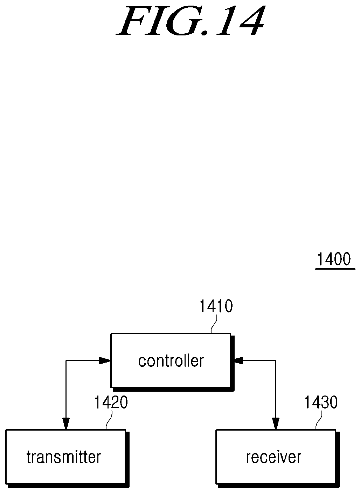

FIG. 14 is a block diagram illustrating a UE according to an embodiment.

Referring to FIG. 14, a UE 1400 for processing a cell prediction result may include a receiver 1430 receiving, from a base station, a configuration message including at least one of first event information on prediction time information and second event information on the cell prediction result, a controller 1410 deriving an evaluation result based on at least one of the first event information and the second event information using an artificial intelligence or machine learning model, and a transmitter 1420, when the derived evaluation result satisfies at least one of the first event information and the second event information, transmitting a report message including the cell prediction result to the base station.

According to an embodiment, the receiver 1430 may receive event information from the base station through an RRC message, which is configured for the UE to evaluate a cell prediction result and report the same accordingly.

According to an embodiment, the first event information may include information what future time of prediction information the UE is to perform reporting based on (e.g., specify the future time at which the UE should perform reporting based on prediction information). The first event information may include information on a time interval as the prediction time information or information on one or more specific time instances as the prediction information.

According to an embodiment, the first event information may be configured to report the prediction result at a corresponding future time (prediction time) within preset time duration. For example, the prediction time may be set within a time window of T1+duration from T1 after a reference time (absolute time or reference (e.g., SFN/slot based) time), the time when an event is set, or the time when prediction is performed. T1 may have a value greater than or equal to 0. Alternatively, T1 may be set by a timer, and the start point may be set based on SFN/slot, etc.

According to another embodiment, the first event information may be configured to report the prediction result at the time corresponding to set N time instances. For example, the prediction time means determining reporting based on N time instances from T1 after a reference time (absolute time or reference (e.g., SFN/slot based) time), a time when an event is set, or a time when prediction is performed. The reporting times may be set as T1+a, T1+2a, or T1+N*a, where N is an integer value larger than or equal to 1. T1 may have a value greater than or equal to 0. T1 may be set by a timer or as a specific time value, and the start point may be set based on SFN/slot, etc.

The second event information may include event information (e.g., details) related to the timing of reporting a report message based on the cell prediction result.

According to an embodiment, the second event information may include event information that determines a reporting trigger of a report message based on a comparison result between a threshold and the cell prediction result. Alternatively, it may include event information for determining whether to trigger a report message by comparing the cell prediction results of the serving cell and the neighboring cell. Alternatively, both the event information described above may be included.

As such, the receiver 1430 receives a higher layer message that includes at least one of the following: event information (first event information) for setting a time for cell prediction and event information (second event information) for determining a reporting trigger based on the cell prediction result. The controller 1410 may configure the received event information to the UE. The event information may be received through various messages, such as a higher layer message or system information or a lower layer message. Alternatively, it may be previously configured in the UE.

The controller 1410 may derive the cell prediction result of the serving cell or the neighboring cell using the artificial intelligence or machine learning model configured in the UE. The artificial intelligence or machine learning model may receive at least one of a cell quality measurement result and a beam quality measurement result and output (e.g., generate) the cell prediction result including at least one of a cell quality prediction result and a cell strength prediction result at the prediction time.

According to an embodiment, the controller 1410 may input the cell quality measurement results, which measured the quality of the cell at a past time, as input values to the artificial intelligence model or machine learning model. The artificial intelligence model or machine learning model may output (e.g., generate) the cell prediction results at the prediction time based on the input values. In other words, the cell prediction result may be derived using the cell level measurement result as the input value.

According to another embodiment, the controller 1410 may input the cell quality measurement result in the cell at a past time, as input values to the artificial intelligence model or machine learning model. The artificial intelligence model or machine learning model may output the cell prediction results at the prediction time based on the input values. In other words, the cell prediction result may be output using the beam level measurement result as the input value.

According to another embodiment, the controller 1410 may input the predicted beam prediction results, as input values to the artificial intelligence model or machine learning model. The artificial intelligence model or machine learning model may output the cell prediction results at the prediction time based on the input values. In other words, the cell prediction result may be output using the beam level prediction result as the input value. Here, the beam level prediction result may be derived using the past beam measurement result through the artificial intelligence model or the machine learning model.

Meanwhile, the cell prediction result may include a cell quality prediction result or a cell strength prediction result for the serving cell. For example, the cell prediction result may include result information, such as RSRP, RSRQ, SINR, etc. for the serving cell or neighboring cell.

The controller 1410 may determine whether the cell prediction result satisfies at least one conditions defined in the first event information and second event information.

If the derived evaluation result is determined to satisfy the first event information, the transmitter 1420 may transmit a report message to the base station.

Alternatively, the transmitter 1420 may transmit a report message to the base station when it is determined that the derived evaluation result meets both the first event information and the second event information. In other words, the report message may be transmitted only when the evaluation result meets both the first event information and the second event information.

Alternatively, if the derived evaluation result is determined to meet the second event information, the transmitter 1420 may transmit a report message to the base station. In this case, the transmitter 1420 may report the evaluation result if the second event, which is the trigger event of the report message, is met, regardless of whether the first event information is met.

Here, the cell prediction result may include at least one of a cell quality prediction result and a cell strength prediction result for the neighboring cell and/or the serving cell.

Further, the report message may include indication information (indicator) to indicate that the cell prediction result is included in the report message. Alternatively, the report message may include at least one of the time information about the prediction time, information about the predicted target cell, cell prediction result information about the target, and indication information.

Besides, the controller 1410 controls the overall operation of the UE 1400 according to the operation of reporting the cell prediction result necessary to perform the above-described embodiments.

The transmitter 1420 and the receiver 1430 are used to transmit or receive signals or messages or data necessary for performing the above-described embodiments, with the base station.

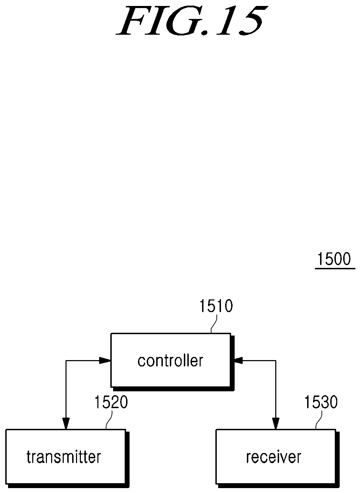

FIG. 15 is a block diagram illustrating a base station according to an embodiment.

Referring to FIG. 15, a base station 1500 for controlling processing of a cell prediction result of a UE may include a transmitter 1520 transmitting, to the UE, a configuration message including at least one of first event information on prediction time information and second event information on the cell prediction result, and a receiver 1530, when an evaluation result derived according to an artificial intelligence or machine learning model of the UE meets at least one of the first event information and the second event information, receiving, from the UE, a report message including the cell prediction result.

For example, the transmitter 1520 may transmit event information to the UE through an RRC message, serving as a reference for configuring the UE to evaluate a cell prediction result and report it.

According to an embodiment, the first event information may include information what future time of prediction information the UE is to perform reporting based on (e.g., specify the future time at which the UE should perform reporting based on prediction information). The first event information may include either a time interval or one or more specific time instances as the prediction time information.

According to an embodiment, the first event information may be configured to report the prediction result at a corresponding future time (prediction time) within preset time duration. For example, the prediction time may be set within a time window of T1+duration from T1 after a reference time (absolute time or reference (e.g., SFN/slot based) time), a time when an event is set, or a time when prediction is performed. T1 may have a value larger than or equal to 0. Alternatively, T1 may be set by a timer, and the start point may be set based on SFN/slot, etc.

According to another embodiment, the first event information may be configured to report the prediction result at the time corresponding to set N time instances. For example, the prediction time refers to determining reporting based on N time instances from T1 after a reference time (absolute time or reference (e.g., SFN/slot based) time), a time when an event is set, or a time when prediction is performed. The reporting time may be set as T1+a, T1+2a, or T1+N*a, where N is an integer value larger than or equal to 1. T1 may have a value larger than or equal to 0. T1 may be set by a timer or as a specific time value, and the start point may be set based on SFN/slot, etc.

The second event information may include event information (e.g., details) related to a time (triggering condition) for reporting a report message based on the cell prediction result.

For example, the second event information may include event information that determines (e.g., specify) a reporting trigger of a report message according to a comparison result between a threshold and the cell prediction result. Alternatively, it may include event information for determining whether to trigger a report message by comparing the cell prediction results of the serving cell and the neighboring cell. Alternatively, both the event information described above may be included.

As such, the transmitter 1520 transmits a higher layer message including at least one of event information (first event information) for setting a time for cell prediction and event information (second event information) for determining a reporting trigger based on the cell prediction result. The UE may configure the received event information accordingly. The event information may be transmitted through various messages, such as a higher layer message or system information or a lower layer message. Alternatively, it may be previously configured in the UE.

Meanwhile, the UE may derive the cell prediction result of the serving cell or the neighboring cell using the artificial intelligence or machine learning model configured in the UE. The artificial intelligence or machine learning model may receive at least one of a cell quality measurement result and a beam quality measurement result and output (e.g., generate) the cell prediction result including at least one of a cell quality prediction result and a cell strength prediction result at the prediction time.

According to an embodiment, the UE may input the cell quality measurement results, which measured the quality of the cell at a past time, as input values to the artificial intelligence model or machine learning model. The artificial intelligence model or machine learning model may output the cell prediction results at the prediction time based on the input values. In other words, the cell prediction result may be output (e.g., derived) using the cell level measurement result as the input value.

According to another embodiment, the UE may input the cell quality measurement result in the cell at a past time, as input values to the artificial intelligence model or machine learning model. The artificial intelligence model or machine learning model may output the cell prediction results at the prediction time based on the input values. In other words, the cell prediction result may be output using the beam level measurement result as the input value.

According to another embodiment, the UE may input the predicted beam prediction results, as input values to the artificial intelligence model or machine learning model. The artificial intelligence model or machine learning model may output the cell prediction results at the prediction time based on the input values. In other words, the cell prediction result may be output using the beam level prediction result as the input value. Here, the beam level prediction result may be derived using the past beam measurement result through the artificial intelligence model or the machine learning model.

Meanwhile, the cell prediction result may include a cell quality prediction result or a cell strength prediction result for the serving cell. For example, the cell prediction result may include result information, such as RSRP, RSRQ, SINR, etc. for the serving cell or neighboring cell.

The UE may determine whether the cell prediction result meets at least one of the first event information and second event information (e.g., conditions defined in the first event information and the second event information).

Meanwhile, if the derived evaluation result is determined to meet the first event information (e.g., conditions defined in the first event information), the UE may transmit a report message to the base station, and the receiver 1530 may receive the same.

Alternatively, the UE may transmit a report message to the base station if it is determined that the derived evaluation result meets the first event information and the second event information, and the receiver 1530 may receive the same. In other words, the report message may be received only when the evaluation result meets both the first event information and the second event information (e.g., all of conditions in both first event information and the second event information).

Alternatively, if the derived evaluation result is determined to meet the second event information, the UE may transmit a report message to the base station, and the receiver 1530 may receive the same. In this case, the evaluation result may be reported if the second event, which is the trigger event of the report message, is met, regardless of whether the first event information is met.

Here, the cell prediction result may include at least one of a cell quality prediction result and a cell strength prediction result for the neighboring cell and/or the serving cell.

Further, the report message may include indication information (indicator) to indicate that the cell prediction result is included in the report message. Alternatively, the report message may include at least one of the time information about the prediction time, information about the predicted target cell, cell prediction result information about the target, and indication information.

Besides, the controller 1510 controls the overall operation of the base station 1500 according to the operation of reporting the cell prediction result necessary to perform the above-described embodiments.

The transmitter 1520 and the receiver 1530 are used to transmit or receive signals or messages or data necessary for performing the above-described embodiments, with the UE.

The foregoing embodiments of the disclosure may be supported by standard documents of at least one of the IEEE 802 system, the 3GPP system, and the 3GPP2 system, all of which are radio (or wireless) access systems. That is, steps, elements, or portions not described in embodiments of the disclosure for the sake of clearly describing the spirit of the disclosure may be supported by the standard documents. For all terms used herein, reference may be made to the standard documents.

The foregoing embodiments of the disclosure may be implemented using a variety of means. For example, embodiments of the disclosure may be implemented using hardware, firmware, software, or any combination thereof.

In case that the disclosure is implemented using hardware, the methods according to embodiments of the disclosure may be realized using one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or the like.

In case that the disclosure is implemented using firmware or software, the methods according to embodiments of the disclosure may be implemented in the form of devices, processes, functions, or the like which perform the functions or operations described above. Software codes may be stored in a memory unit to be executed by a processor. The memory unit may be located inside or outside of the processor and may exchsange data with the processor by a variety of known means.

The terms, such as "system", "processor", "controller", "element", "module", "interface", "model", or "unit", used herein may generally refer to computer-related entity hardware, a combination of hardware and software, software, or software in execution. For example, the above-described elements may be at least one selected from, but are not limited to, a process, a processor, a controller, a control processor, an entity, an execution thread, a program, and a computer. For example, both an application being executed by the controller or processor and the controller or processor may be an element. One or more elements may reside in at least one of a process and an execution thread. An element may be located in a single device (e.g., a system or a computing device) or may be distributed across two or more devices.

The foregoing descriptions have been provided to illustrate certain principles of the disclosure by way of example. A person having ordinary knowledge in the technical field to which the disclosure pertains could make various modifications and variations without departing from the essential features of the principles of the disclosure. In addition, the foregoing embodiments shall be interpreted as being illustrative, while not being limitative, of the principles and scope of the disclosure. The scope of protection of the disclosure shall be interpreted in accordance with the appended Claims, and all technical ideas equivalent thereto shall be understood to be included in the scope of protection of the disclosure.

**Claims**

1. A method for processing a cell prediction result by a user equipment (UE), the method comprising:

   receiving, from a base station, a configuration message including at least one of i) first event information on prediction time information and ii) second event information on the cell prediction result;
   deriving an evaluation result for at least one of the first event information and the second event information using an artificial intelligence or machine learning model; and
   in an event that the derived evaluation result meets at least one of the first event information and the second event information, transmitting a report message including the cell prediction result to the base station.

2. The method of claim 1, wherein the first event information includes a timer interval as the prediction time information or one or more predetermined time instances as the prediction time information.

3. The method of claim 1, wherein the artificial intelligence or machine learning model receives at least one of a cell quality measurement result and a beam quality measurement result and outputs the cell prediction result including at least one of a cell quality prediction result and a cell strength prediction result at the prediction time.

4. The method of claim 1, wherein the report message is transmitted in an event that the evaluation result meets both the first event information and the second event information.

5. The method of claim 1, wherein the cell prediction result includes at least one of a cell quality prediction result and a cell strength prediction result for a neighboring cell.

6. The method of claim 1, wherein the report message includes indication information including the cell prediction result.

7. A method for controlling processing of a cell prediction result of a user equipment (UE) by a base station, the method comprising:

   transmitting, to the UE, a configuration message including at least one of first event information on prediction time information and second event information on the cell prediction result; and
   in an event that an evaluation result derived by an artificial intelligence or machine learning model of the UE meets at least one of the first event information and the second event information, receiving, from the UE, a report message including the cell prediction result.

8. The method of claim 7, wherein the first event information includes a time interval as the prediction time information or one or more predetermined time instances as the prediction time information.

9. The method of claim 7, wherein the artificial intelligence or machine learning model receives at least one of a cell quality measurement result and a beam quality measurement result and outputs the cell prediction result including at least one of a cell quality prediction result and a cell strength prediction result at the prediction time.

10. The method of claim 7, wherein the report message is received in an event that the evaluation result meets both the first event information and the second event information.

11. The method of claim 7, wherein the cell prediction result includes at least one of a cell quality prediction result and a cell strength prediction result for a neighboring cell of the UE.

12. The method of claim 7, wherein the report message includes indication information including the cell prediction result.

13. A user equipment (UE) processing a cell prediction result, comprising:

a receiver configured to receive, from a base station, a configuration message including at least one of first event information on prediction time information and second event information on the cell prediction result;
a controller configured to derive an evaluation result for at least one of the first event information and the second event information using an artificial intelligence or machine learning model; and
a transmitter configured to, in an event that the derived evaluation result meets at least one of the first event information and the second event information, transmit a report message including the cell prediction result to the base station.

14. The UE of claim 13, wherein the first event information includes a time interval as the prediction time information or one or more predetermined time instances as the prediction time information.

15. The UE of claim 13, wherein the artificial intelligence or machine learning model receives at least one of a cell quality measurement result and a beam quality measurement result and outputs the cell prediction result including at least one of a cell quality prediction result and a cell strength prediction result at the prediction time.

# FIG.1

# FIG.2

One frame, $T_{frame}$ = 10ms

One subframe, $T_{subframe}$ = 1ms

| #0 | #1 | #2 | #3 | #4 | #5 | #6 | #7 | #8 | #9 |

$\Delta f = 15kHz$

One slot, 1ms

$\Delta f = 30kHz$

One slot, 0.5ms

$\Delta f = 60kHz$

One slot, 0.25ms

$\Delta f = 120kHz$

One slot, 0.125ms

$\Delta f = 240kHz$

One slot, 0.0625ms

# FIG.3

One subframe

Carrier bandwidth

Resource grid, 2deltaf

Resource grid, deltaf

One resource black-12 subcarriers, subcarrier spacing 2deltaf

One resource black-12 subcarriers, subcarrier spacing 2deltaf

EP 4 607 996 A1

FIG.4

# *FIG.5*

# FIG.6

TERMINAL(UE)                                    BASE STATION(gNB)

Preamble(PRACH)

RA Response(RAR)

"Message 3"

Collision
resolution

"Message 4"

# FIG.7

# FIG.8

```
        UE              Source gNB                              Target gNB

        │                    │                                       │
        │                    │      1. HANDOVER REQUEST              │
        │                    │──────────────────────────────────────▶│
        │                    │                                       │
        │                    │                              ┌────────────────────┐
        │                    │                              │ Admission Control  │
        │                    │                              └────────────────────┘
        │                    │   2. HANDOVER REQUEST ACKNOWLEDGE     │
        │                    │◀──────────────────────────────────────│
        │  3. RRCReconfiguration                                     │
        │◀───────────────────│                                       │
   ┌──────────────────┐      │                                       │
   │ Switch to New Cell│     │                                       │
   └──────────────────┘      │                                       │
        │         4. RRCReconfigurationComplete                      │
        │───────────────────────────────────────────────────────────▶│
        │                    │                                       │
```

EP 4 607 996 A1

# FIG.9

Figure 9.2.3.2.1-1 step 9-12

# FIG.10

S1000

```
      ┌──────────┐
      │  Start   │
      └────┬─────┘
           │
           ▼
┌─────────────────────────────┐
│ receive configuration message│ ～S1010
└──────────────┬──────────────┘
               │
               ▼
┌─────────────────────────────┐
│   derive evaluation result   │ ～S1020
└──────────────┬──────────────┘
               │
               ▼
┌─────────────────────────────┐
│   transmit report message    │ ～S1030
└──────────────┬──────────────┘
               │
               ▼
          ┌─────────┐
          │   End   │
          └─────────┘
```

# FIG.11

<u>S1100</u>

# FIG.12

EP 4 607 996 A1

# FIG.13

UE                                                                    gNB

| perform AI/ML−based mobility−related capability reporting procedure |

RRC message including Event P_T1 &
(Event P_A3/Event P_A5)

| predict quality/strength for serving/neighbor cell for future time |

| meet set event |

report neighbor cell information
corresponding to prediction time meeting event

# *FIG.14*

## FIG.15

1500

1510
controller

1520
transmitter

1530
receiver

Europäisches
Patentamt

European
Patent Office

Office européen
des brevets

## EUROPEAN SEARCH REPORT

**Application Number**

EP 25 15 9054

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/219375 A1 (LG ELECTRONICS INC [KR]) 16 November 2023 (2023-11-16) * paragraphs [0006] - [0014] * * paragraphs [0625] - [0632] * * paragraph [0149] * ----- | 1-15 | INV. H04W24/10 H04W36/00 ADD. H04W24/08 |
| X | WO 2023/243931 A1 (LG ELECTRONICS INC [KR]) 21 December 2023 (2023-12-21) * paragraphs [0601] - [0624] * ----- | 1-12,14, 15 | |

**TECHNICAL FIELDS SEARCHED (IPC)**

G06N
H04W

The present search report has been drawn up for all claims

| Place of search | Date of completion of the search | Examiner |
|---|---|---|
| Munich | 8 July 2025 | Pasini, Enrico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 9054

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2025

| Patent document cited in search report | Publication date | Patent family member(s) | | Publication date |
|---|---|---|---|---|
| WO 2023219375 A1 | 16-11-2023 | CN | 119183665 A | 24-12-2024 |
| | | EP | 4523450 A1 | 19-03-2025 |
| | | KR | 20250008034 A | 14-01-2025 |
| | | WO | 2023219375 A1 | 16-11-2023 |
| WO 2023243931 A1 | 21-12-2023 | CN | 119404540 A | 07-02-2025 |
| | | EP | 4541067 A1 | 23-04-2025 |
| | | WO | 2023243931 A1 | 21-12-2023 |

EPO FORM P0459

For more details about this annex : see Official Journal of the European Patent Office, No. 12/82

**REFERENCES CITED IN THE DESCRIPTION**

**Patent documents cited in the description**

- KR 1020240026126

- KR 1020250009518